# EUROPEAN PATENT SPECIFICATION

(11) **EP 2 506 496 B1**
(45) Date of publication and mention of the grant of the patent: **13.05.2015**
(21) Application number: 11305352.4
(22) Date of filing: 29.03.2011
(51) Int. Cl.: H04L 12/24, H04B 3/32, H04L 12/28

(54) **Method for performing spectrum management in a subscriber premises network**
Verfahren zur Durchführung von Spektrumsverwaltung in einem Teilnehmer-Netzwerk
Procédé d'exécution de gestion de spectre dans un réseau de site d'abonnés

(43) Date of publication of application: 03.10.2012
(73) Proprietor: ALCATEL LUCENT, 92100 Boulogne-Billancourt (FR)
(72) Inventor: Maes, Jochen, 2431 Veerle (BE); Timmers, Michael, 3020 Herent (BE); Guenach, Mamoun, 1830 Machelen (BE)
(74) Representative: ALU Antw Patent Attorneys

(56) References cited:
- EP-A1- 2 259 456
- US-A1- 2006 193 336
- US-A1- 2007 274 404
- "PowerLine Telecommunications (PLT); Study on signal processing improving the coexistence of VDSL2 and PLT", TECHNICAL REPORT, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. PLT, no. V1.1.1, 1 September 2010 (2010-09-01), XP014061330,

## Description

### Field of Invention

The present invention pertains to the field of spectrum management, more particularly to the field of applying spectrum management in a local area network, such as a subscriber premises network.

### Background

It is known to apply spectrum management to wireless transmission systems and to digital subscriber line (DSL) systems. Subscriber lines are physically collocated in binders, in which a frequency and coupling length dependent amount of crosstalk will originate between the signals travelling over the respective lines. Just like multiple access or co-channel interference in wireless transmitters, DSL transmitters must therefore take into account certain spectral restrictions in order to coexist with other, similar or dissimilar systems. In an advanced form of spectrum management, the power spectral densities (PSDs) of multiple DSL transmitters are coordinated to e.g. achieve an increase in the aggregate bit rate available to these transmitters or even to decrease the total power to meet certain target rates.

ETSI TR 102 930 vl.1.1 deals with the coexistence of VDSL2 and PLT, disclosing a way to 'optimize' coexistence by changing the PLT transmission spectrum so as to avoid overlap with the bands used by VDSL2 downstream communication. European patent application EP 2 259 456 A1, entitled "Dynamic digital communication system control", deals with dynamic spectrum management (vectoring) for DSL systems. It is not concerned with power-line communications.

United States patent application US 2007/0274404 A1, entitled "Method for distributed management of digital communications systems", discloses a method for distributed spectrum management that provides joint optimization of several users' effective data rates through a detailed analysis of the interference characteristics prevailing in the network.

### Summary

The present invention is based on the insight that the presence of a local area network (LAN) at the premises of the subscriber influences and is influenced by the operational characteristics of this subscriber's DSL link. It is therefore an object of the present invention to jointly optimize the capacity and/or the power consumption of the access link and the local link(s).

In a first aspect of the present invention, there is provided a method for performing spectrum management in view of a predetermined constraint in a network comprising an access link and a local area link, the access link and the local area link being interferingly coupled, the method comprising: quantifying interference between the access link and the local area link; determining a first spectral configuration for a first transmitter operating over the access link; and determining a second spectral configuration for a second transmitter operating over the local area link; wherein the determining of the first spectral configuration and the determining of the second spectral configuration are performed such that the respective achievable channel capacities of the access link and the local area link meet the predetermined constraint.

In an embodiment of the method according to the present invention, the predetermined constraint comprises maximizing the weighted sum of the respective channel capacities of the access link and the local area link.

In an embodiment of the method according to the present invention, the predetermined constraint comprises maximising the lesser one of the respective channel capacities of the access link and the local area link.

In an embodiment, the method according to the present invention further comprises analyzing a topology of the network to determine the predetermined constraint.

In an embodiment of the method according to the present invention, the quantifying of the interference comprises: cycling the first transmitter through an active state and a passive state to determine a difference in received interference from the first transmitter; cycling the second transmitter through an active state and a passive state to determine a difference in received interference from the second transmitter; obtaining first information from a first receiver operating over the access link to determine a difference in received interference during the cycling of the second transmitter; and obtaining second information from a second receiver operating over the local area link to determine a received interference during the cycling of the first transmitter.

Here, a substantially passive state refers to a state in which the PSD is reduced or set to zero on at least a relevant fraction of the transmission bandwidth.

In a particular embodiment, the first transmitter and the second transmitter are comprised in a customer premises equipment, the quantifying of the interference being controlled by a processor comprised in the customer premises equipment, the processor being operatively coupled to the first transmitter and the second transmitter, and the processor being further configured to receive the first information from the first receiver and the second information from the second receiver.

In another particular embodiment, the quantifying of the interference is controlled by a network management apparatus, the network management apparatus being configured to control the first transmitter, the second transmitter, the first receiver, and the second receiver.

In a more particular embodiment, the network management apparatus controls at least one of the first transmitter, the second transmitter, the first receiver, and the second receiver through a TR-069 protocol exchange.

While the processor may reside in a the customer premises equipment that also comprises the access network termination and an in-home network termination, the processor may also quantify interference from and to access and in-home transceivers outside of the customer premises equipment. Likewise, the processor may control the configuration of access and in-home transceivers outside of the customer premises equipment.

According to another aspect of the present invention, there is provided a computer program configured for carrying out the method as described above.

According to another aspect of the present invention, there is provided a customer premises equipment for use in the method as described above.

According to another aspect of the present invention, there is provided a network management apparatus for use in the method as described above.

### Brief Description of the Figures

Some embodiments of apparatus and/or methods in accordance with embodiments of the present invention are now described, by way of example only, and with reference to the accompanying drawings, in which:
Figure 1 illustrates a first exemplary topology of a network in which the invention may be used advantageously;
Figure 2 illustrates a second exemplary topology of a network in which the invention may be used advantageously;
Figure 3 illustrates an exemplary network with a spectrum manager according to the present invention; and
Figure 4 provides a flow chart of an embodiment of the method according to the present invention.

### Description of Embodiments

The skilled person will understand that any references to a home network in the present description are strictly exemplary and not intended to limit the scope of application of the present invention to residential settings. The invention is in fact also applicable to other settings in which an access link and a local area network link are present, including office, industry, hospitality, and educational settings.

The number of transceivers shown in the figures is chosen for illustrative purposes only, and does not limit the generality of the invention in any way. Operations described in relation to a given transceiver may apply, *mutatis mutandis,* to other transceivers in the network.

It is known to apply spectrum management to digital subscriber line (DSL) access systems. In an advanced form of spectrum management, the power spectral densities of multiple DSL transmitters are coordinated to achieve an increase in the aggregate bit rate available to these transmitters. Coordination can easily be achieved between DSL lines that originate from a common access node (digital subscriber line access multiplexer, DSLAM), because all the necessary information is centralized at that point. DSL systems based on discrete multi-tone (DMT) transmission, such as ADSL, VDSL, and their successors, are particularly suited for advanced spectrum management, because these systems allow per-tone power configuration (leading to a frequency decoupling of the optimization problem) and because they use a fixed symbol duration of 250 µs, which may be synchronized between lines (leading to a further decoupling of the optimization problem).

Certain LAN communication technologies for use in the home network (HN), such as HomePlug AV, G.hn and IEEE P1901, are known to mutually interfere with the twisted pairs used by DSL operators as they share some parts of the spectrum.

For example, G.hn technology can use the frequency band from close to DC up to 100 MHz while VDSL2 is only restricted to 30 MHz. As a result of the mutual interference, the attainable data rate of the copper access link is reduced by 20% to 50%. The problem is particularly notable in the downstream direction due to the near-far effect between the downstream transmitter and the home network transmitter: the DSL DS signal received at the customer premises is already attenuated by a certain amount that depends on the distance between the customer premises equipment (CPE) and the access node.

Not only the rate of the DSL line is impacted, but also the stability of the lines, because of the transient noise induced by the home network devices, which typically transmit intermittently.

On the other hand, for some legacy home network technology operating over a reduced frequency band, e.g. [0,30] MHz, crosstalk induced by DSL into the home network link may limit the capacity of the home network.

The present invention is *inter alia* based on the insight that it is advantageous to have the spectra of both the access and in-home link jointly optimized. However, the present invention is also based on the realization that the spectrum management advantages of DMT-based DSL systems (frequency decoupling, time decoupling, and centralized management) are not applicable to a mixed DSL/home network environment. The present invention therefore introduces a novel common spectrum manager for both the access and the in-home link.

For example, the frequency decoupling that is present among DSL systems is not present among a mix of DSL and in-home systems. DSL uses DMT with filtering in the time domain, which corresponds to a "sinc" function in the frequency domain. The carrier spacing and filtering are such that the carrier frequency positions correspond to the zero crossings of the "sinc" functions of all other carriers. Therefore, the different sub-channels or tones are orthogonal and the transmit PSD at one tone does not cause significant inter-carrier interference into adjacent tones. In this way, the spectral optimization problem in DSL is decoupled over tones. Access and in-home systems use different carrier frequencies, and as such the optimization problem does no longer decouple over tones. One way to circumvent the issue is by adapting the optimization framework such that the inter-carrier interference can be modeled or estimated and added to the interference observed on a particular carrier. This means that the problem statement can no longer be decoupled over tones, leading to higher processing complexity. However, the higher processing complexity is tempered by the low number of disturbing lines. While in an access environment, typically tens of lines mutually interfere, the number of mutually interfering lines in the problem at hand is limited to one access link and one or a few in-home links. The increased complexity due to coupling over tones is therefore partly compensated by a reduced complexity in the number of lines. Alternative ways to circumvent the coupling over tones is to derive a PSD level on a larger bandwidth scale, e.g. optimize over a limited number of guide tones and interpolate to determine the PSD of the remaining tones, instead of per tone.

The common spectrum manager may reside within a CPE that integrates both the DSL and the home network chips, or could be part of a separate management platform in the access operator's network that talks to the in-home devices, e.g. through the TR-069 protocol. This protocol could allow the configuration of the overall transmit power, and certain aspects of the shape of the PSD, such as the application of spectral notches, amongst other things.

Two exemplary scenarios may be considered for approaching the interactions between a DSL access network and an in-home distribution network.

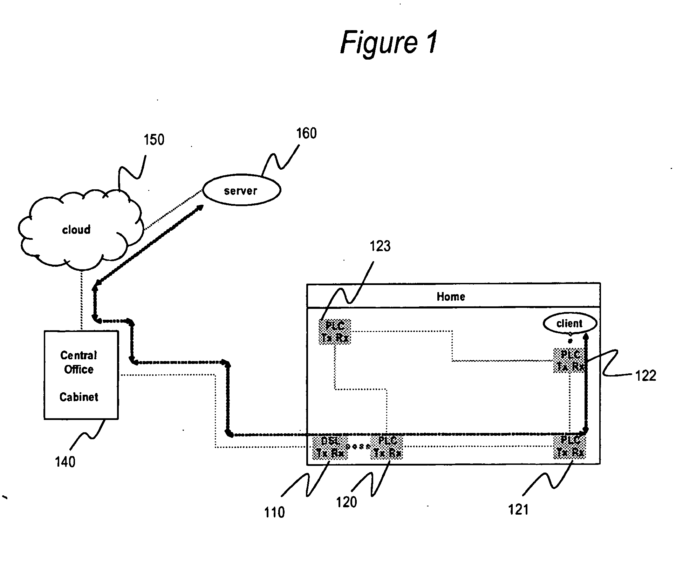

In the first exemplary scenario, illustrated in Figure 1, the DSL access network, extending between an access node or central office **140** and a line termination **110** at the customer premises, collaborates with the in-home distribution network **120-123** to provide the user with a service, exemplified by server **160,** offered from within the wide area network, a.k.a. the "cloud" **150.** In this scenario, both networks share a common goal and spectral optimization can be used to achieve that common objective.

In the first scenario, the aggregated downstream and upstream net DSL data rate (on the path **140-110)** should match the net data rate on the home network (in the illustrated example, the path **120-121-122),** because the home network is an extension of the access network. Functionally, the goal is to avoid that either one of the DSL link or the home network presents a bottleneck for the data flow.

For completeness, server **160** and wide area network **150** are illustrated as being operatively connected to the access node **140.** Clearly, the path **160-150-140** contributes to the quality of the end-to-end service delivery.

The net attainable DSL data rate depends on loop length, noise conditions and the configured parameter set. The net data rate in the home network depends on the corresponding in-home parameters. Both also depend on the mutual interference.

The method according to the present invention includes a step in which this mutual interference is quantified. This can be done by adapting the configuration on the devices and observing the effects. For instance, the crosstalk from the home network into the DSL link can be quantified by comparing the quiet line noise (QLN) or signal-to-noise ratio (SNR) when the home network device is turned off (or notched on the relevant frequencies) to when it is on. The difference between these measurements provides the crosstalk noise power from home network. The interference from the DSL link to the home network can be acquired in a similar way.

The required accuracy may allow further optimizations of the method of the invention. In an advantageous embodiment, it is sufficient to determine upper bounds on this interference.

Depending on the home networking technology, a direct SNR or QLN measurement may not be available. Nevertheless, an indirect measure is provided by reading out and comparing the throughput, i.e. the net data rate, when the DSL line is on and off (or notched), respectively.

Having the crosstalk channel state information, known spectrum balancing techniques can be applied for the joint optimization step. The target may be to maximize the minimum data rate of the DSL and home network link and/or to minimize the power. This target acts as a predetermined constraint for the optimization process. Depending on the chosen optimization algorithm, such spectrum balancing may lead to a frequency-dependent spectral shape in a format consistent with configurationally options of the in-home or access transmitter, or to simplified heuristic power back-off schemes.

As home network technologies may transmit intermittently, it is advantageous to store different operational profiles for the DSL link depending on whether the relevant home network transmitter is active or not. This requires obtaining information about the activity of the transmitter (by detection, or by receiving anticipatory information directly from the home network transmitter itself), and switching DSL profiles with a very low reaction time.

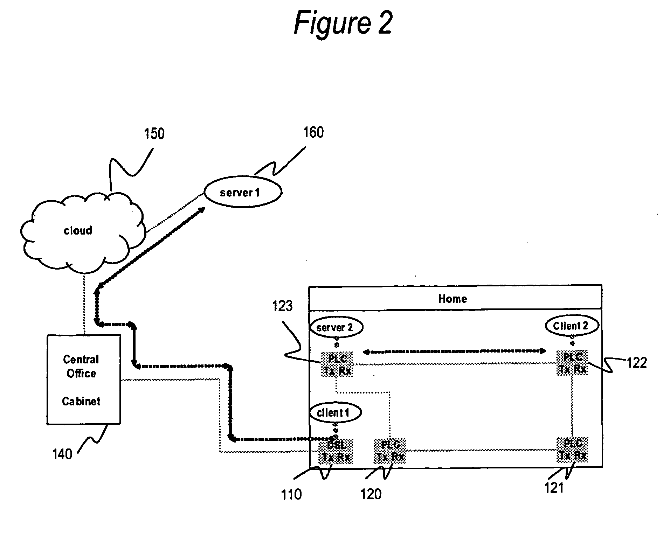

In the second exemplary scenario, illustrated in Figure 2, the DSL access network, extending between an access node or central office **140** and a line termination **110** at the customer premises, provides a first service, while the in-home distribution network **123-122** provides a second (in-home) service, such as media distribution from an in-home media service, exemplified by the server shown along with transceiver **123.** Other elements of Figure 2 correspond to the elements with the same numbers in Figure 1.

Accordingly, the home network also carries data that does not need to go out into (and does not come from) the access network. In that scenario, spectral optimization should balance the competing objectives of both networks.

The net data rate of the home network, when needed, can be allowed to be higher than the net DSL data rate. This modified constraint can be introduced in the general spectrum optimization framework described above through e.g. weight factors to trade off the competing targets. The weighting would relate to the importance of the end-to-end link from cloud to end-device(s) vis-à-vis the links between the different in-home end devices.

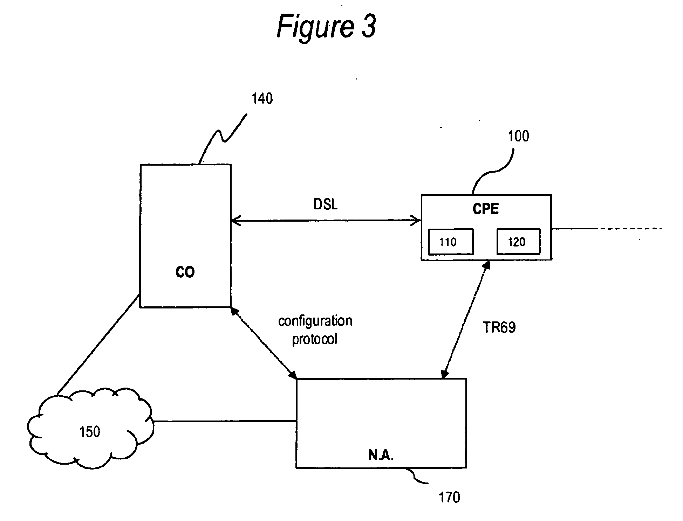

Figure 3 conceptually illustrates how the method of the present invention may be carried out in part or completely from outside the home network. A network analyzer **170** is operatively connected to one or more of the access node **140** and the customer premises equipment **100** via a network **150,** preferably by means of a remote configuration protocol. In applicable cases, TR-069 may be used as the remote configuration protocol.

Without loss of generality, the customer premises equipment **100** comprises a first transceiver **110** for interacting with the DSL line and a second transceiver **120** for interacting with the LAN. In order to carry out the method of the present invention, the customer premises equipment **100** may be instructed by the network analyzer **170** to selectively activate the transceivers operating on the various links, and to assess a measure of the mutual interference as described above.

The customer premises equipment **100** may also act as a proxy for other LAN transceivers **121-123** in the LAN, which may be included in the method of the present invention. For this purpose, the customer premises equipment **100** may be required to relay management messages from and to the network analyzer **170,** optionally translating between the protocol used by the network analyzer **170** (e.g., TR-069) and a different management protocol used inside the LAN.

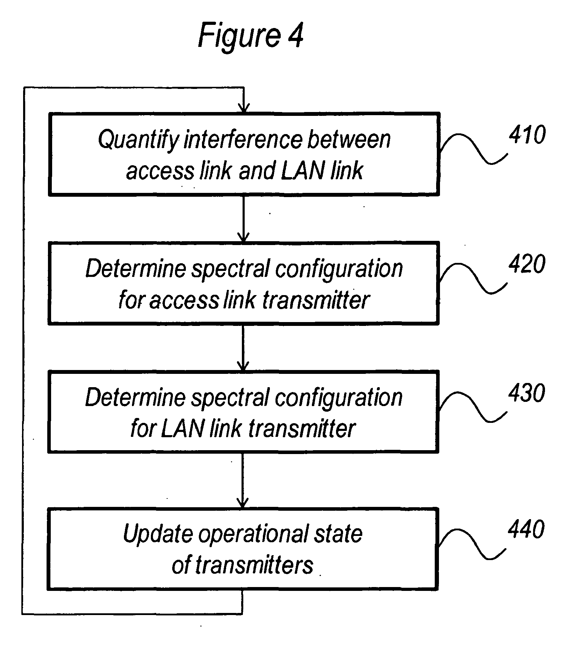

The method of the present invention is further conceptually illustrated by the flow chart of Figure 4. Although the different process steps illustrated in Figure 4 are shown in a certain order, this should not be taken to imply that the chosen order is necessary to carry out the invention. As will be clear from the description below, certain steps may be reordered or even omitted without leaving the scope of the invention.

In a preliminary step (not shown) the method of the present invention may include determining the type of configuration that needs to take place and the resulting performance constraints, i.e. an configuration of the type described above in connection with the first scenario, or a configuration of the type described above in connection with the second scenario. The step of quantifying the mutual interference between access link and LAN link **410** may accordingly include a sub-step of checking whether the end-to-end link, or each of the individual links, meets the predetermined performance requirements, as the case may be.

In the next step or steps, the desired spectral configuration for the access link transmitter is determined **420** and/or the desired spectral configuration for the LAN link transmitter is determined **430,** according to a known spectrum allocation algorithm and in view of the constraints determined before. The spectrum allocation algorithm may be chosen so as to simply meet the predetermined constraints, if possible, or to also optimize a certain utility function (e.g., end-to-end throughput or throughput of a given link).

In a subsequent step **440,** the updated configuration parameters are imposed on the affected transmitter(s).

As indicated by the arrow returning from step **440** to step **410,** the process can be repeated periodically, to take a dynamically varying interference environment into account. Alternatively or additionally, the process may be repeated asynchronously upon the occurrence of specific events, such as the addition or removal of a transceiver in the relevant part of the network.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. A method for performing spectrum management in view of a predetermined constraint in a network comprising an access link of a Digital Subscriber Line type and a local area link of a home network type, said access link and said local area link being interferingly coupled, said method comprising:
- quantifying (410) interference between said access link and said local area link; and
- determining (430) a second desired spectral configuration for a second transmitter (120 TX; 121 TX; 122 TX; 123 TX) operating over said local area link;
**characterized in that** said method further comprises
- determining (420) a first desired spectral configuration for a first transmitter (110 TX) operating over said access link;
**and in that** said determining of said first desired spectral configuration and said determining of said second desired spectral configuration are performed such that the respective achievable channel capacities of said access link and said local area link meet said predetermined constraint.

2. The method of claim 1, wherein said predetermined constraint comprises maximizing the weighted sum of said respective channel capacities of said access link and said local area link.

3. The method of claim 1, wherein said predetermined constraint comprises maximizing the lesser one of said respective channel capacities of said access link and said local area link.

4. The method of claim 1, further comprising analyzing a topology of said network to determine said predetermined constraint.

5. The method of any of the preceding claims, wherein said quantifying (410) of said interference comprises:
- cycling said first transmitter (110 TX) through an active state and a substantially passive state to determine a difference in received interference from said first transmitter (110 TX);
- cycling said second transmitter (120 TX; 121 TX; 122 TX; 123 TX) through an active state and a substantially passive state to determine a difference in received interference from said second transmitter (120 TX; 121 TX; 122 TX; 123 TX);
- obtaining first information from a first receiver (110 RX) operating over said access link to determine a difference in received interference during said cycling of said second transmitter (120 TX; 121 TX; 122 TX; 123 TX); and
- obtaining second information from a second receiver (120 RX; 121 RX; 122 RX; 123 RX) operating over said local area link to determine a received interference during said cycling of said first transmitter (110 TX).

6. The method of claim 5, wherein said first transmitter (110 TX) and said second transmitter (120 TX) are comprised in a customer premises equipment (100), said quantifying (410) of said interference being controlled by a processor comprised in said customer premises equipment (100), said processor being operatively coupled to said first transmitter (110 TX) and said second transmitter (120 TX), and said processor being further configured to receive said first information from said first receiver (110 RX) and said second information from said second receiver (120 RX).

7. The method of claim 5, wherein said quantifying (410) of said interference is controlled by a network management apparatus (170), said network management apparatus (170) being configured to control said first transmitter (110 TX), said second transmitter (120 TX; 121 TX; 122 TX; 123 TX), said first receiver (110 RX), and said second receiver (120 RX; 121 RX; 122 RX; 123 RX).

8. The method of claim 7, wherein said network management apparatus (170) controls at least one of said first transmitter (110 TX), said second transmitter (120 TX; 121 TX; 122 TX; 123 TX), said first receiver (110 RX), and said second receiver (120 RX; 121 RX; 122 RX; 123 RX) through a TR-069 protocol exchange.

9. A computer program configured for carrying out, when executed, the method of any of the preceding claims.

10. A customer premises equipment (100) configured to perform the method of claim 6, said customer premises equipment (100) comprising:
- a first transceiver (110), comprising the first transmitter and the first receiver, for interacting with said access link,
- a second transceiver (120), comprising the second transmitter and the second receiver, for interacting with said local area link, and
- a processor operatively coupled to said first transceiver (110) and said second transceiver (120), said processor being configured to perform said quantifying (410) of said interference and to receive said first information from said first transceiver (110) and said second information from said second transceiver (120).

11. A network management apparatus (170) for use in the method of claim 7, said network management apparatus (170) being configured to control said quantifying (410) of said interference by controlling said first transmitter (110 TX), said second transmitter (120 TX; 121 TX; 122 TX; 123 TX), said first receiver (110 RX), and said second receiver (120 RX; 121 RX; 122 RX; 123 RX).

## Patentansprüche

1. Verfahren zur Durchführung von Spektrumsverwaltung in Hinblick auf eine vorbestimmte Beschränkung in einem Netzwerk, welches eine Zugangsverbindung vom Typ einer digitalen Teilnehmerleitung und eine lokale Verbindung vom Typ Heimnetzwerk umfasst, wobei die besagte Zugangsverbindung und die besagte lokale Verbindung interferenzmäßig gekoppelt sind, wobei das besagte Verfahren umfasst:
- Quantifizieren (410) der Interferenz zwischen der besagten Zugangsverbindung und der besagten lokalen Verbindung; und
- Ermitteln (430) einer zweiten gewünschten spektralen Konfiguration für einen zweiten Sender (120 TX; 121 TX; 122 TX; 123 TX), welcher über die besagte lokale Verbindung betrieben wird;
**dadurch gekennzeichnet, dass** das besagte Verfahren weiterhin umfasst:
- Ermitteln (420) einer ersten gewünschten spektralen Konfiguration für einen ersten Sender (110 TX), welcher über die besagte Zugangsverbindung betrieben wird;
**und dass** das besagte Ermitteln der besagten ersten gewünschten spektralen Konfiguration und das besagte Ermitteln der besagten zweiten gewünschten spektralen Konfiguration derart durchgeführt werden, dass die jeweiligen erreichbaren Kanalkapazitäten der besagten Zugangsverbindung und der besagten lokalen Verbindung die besagten vorbestimmten Beschränkungen erfüllen.

2. Verfahren nach Anspruch 1, wobei die besagte vorbestimmte Beschränkung die Maximierung der gewichteten Summe der besagten jeweiligen Kanalkapazitäten der besagten Zugangsverbindung und der besagten lokalen Verbindung umfasst.

3. Verfahren nach Anspruch 1, wobei die besagte vorbestimmte Beschränkung die Maximierung der niedrigeren der besagten jeweiligen Kanalkapazitäten der besagten Zugangsverbindung und der besagten lokalen Verbindung umfasst.

4. Verfahren nach Anspruch 1, weiterhin umfassend das Analysieren einer Topologie des besagten Netzwerks zur Ermittlung der besagten vorbestimmten Beschränkung.

5. Verfahren nach einem beliebigen der vorstehenden Ansprüche, wobei das besagte Quantifizieren (410) der besagten Interferenz umfasst:
- Durchführen eines Schaltspiels des besagten ersten Senders (110 TX) durch einen aktiven Zustand und einen im Wesentlichen passiven Zustand, um eine Differenz in der empfangenen Interferenz von dem besagten ersten Sender (110 TX) zu ermitteln;
- Durchführen eines Schaltspiels des besagten zweiten Senders (120 TX; 121 TX; 122 TX; 123 TX) durch einen aktiven Zustand und einem im Wesentlichen passiven Zustand, um eine Differenz in der empfangenen Interferenz von dem besagten zweiten Sender (120 TX; 121 TX; 122 TX; 123 TX) zu ermitteln;
- Einholen einer ersten Information von einem ersten Empfänger (110 RX), welcher über die besagte Zugangsverbindung betrieben wird, um eine Differenz in der besagten empfangenen Interferenz während des besagten Schaltspiels des besagten zweiten Senders (120 TX; 121 TX; 122 TX; 123 TX) zu ermitteln; und
- Einholen einer zweiten Information von einem zweiten Empfänger (120 RX; 121 RX; 122 RX; 123 RX), welcher über die besagte lokale Verbindung betrieben wird, um eine Differenz in der empfangenen Interferenz während des besagten Schaltspiels des besagten ersten Senders (110 TX) zu ermitteln.

6. Verfahren nach Anspruch 5, wobei der besagte erste Sender (110 TX) und der besagte zweite Sender (120 TX) in einer Einrichtung am Kundenstandort (100) umfasst sind, wobei das besagte Quantifizieren (410) der besagten Interferenz durch einen in der besagten Einrichtung am Kundenstandort (100) umfassten Prozessor gesteuert wird, wobei der besagte Prozessor betriebsfähig an den besagten ersten Sender (110 TX) und den besagten zweiten Sender (120 TX) gekoppelt ist, und wobei der besagte Prozessor weiterhin für den Empfang der besagten ersten Information von dem besagten ersten Empfänger (110 RX) und der besagten zweiten Information von dem besagten zweiten Empfänger (120 RX) konfiguriert ist.

7. Verfahren nach Anspruch 5, wobei das besagte Quantifizieren (410) der besagten Interferenz von einer Netzwerkverwaltungsvorrichtung (170) gesteuert wird, wobei die besagte Netzwerkverwaltungsvorrichtung (170) für die Steuerung des besagten ersten Senders (110 TX), des besagten zweiten Senders (120 TX; 121 TX; 122 TX; 123 TX), des besagten ersten Empfängers (110 RX) und des besagten zweiten Empfängers (120 RX; 121 RX; 122 RX; 123 RX) konfiguriert ist.

8. Verfahren nach Anspruch 7, wobei die besagte Netzwerkverwaltungsvorrichtung (170) zumindest einen unter dem besagten ersten Sender (110 TX), dem besagten zweiten Sender (120 TX; 121 TX; 122 TX; 123 TX), dem besagten ersten Empfänger (110 RX) und dem besagten zweiten Empfänger (120 RX; 121 RX; 122 RX; 123 RX) über einen TR-069-Protokollaustausch steuert.

9. Computerprogramm, welches dafür konfiguriert ist, bei dessen Ausführung das Verfahren eines beliebigen der vorstehenden Ansprüche durchzuführen.

10. Einrichtung am Kundenstandort (100), konfiguriert für die Durchführung des Verfahrens nach Anspruch 6, wobei die besagte Einrichtung am Kundenstandort (100) umfasst:
- Einen ersten Transceiver (110), umfassend den ersten Sender und den ersten Empfänger, um mit der besagten Zugangsverbindung zusammenzuwirken,
- einen zweiten Transceiver (120), umfassend den zweiten Sender und den zweiten Empfänger, um mit der besagten lokalen Verbindung zusammenzuwirken,
- einen Prozessor, welcher betriebsfähig an den besagten ersten Transceiver (110) und den besagten zweiten Transceiver (120) gekoppelt ist, wobei der besagte Prozessor für das Durchführen der besagten Quantifizierung (410) der besagten Interferenz und für den Empfang der besagten ersten Information von dem besagten ersten Transceiver (110) und der besagten zweiten Information von dem besagten zweiten Transceiver (120) konfiguriert ist.

11. Netzwerkverwaltungsvorrichtung (170) zur Verwendung in dem Verfahren nach Anspruch 7, wobei die besagte Netzwerkverwaltungsvorrichtung (170) für die Steuerung der besagten Quantifizierung (410) der besagten Interferenz durch Steuern des besagten ersten Senders (110 TX), des besagten zweiten Senders (120 TX; 121 TX; 122 TX; 123 TX), des besagten ersten Empfängers (110 RX) und des besagten zweiten Empfängers (120 RX; 121 RX; 122 RX; 123 RX) konfiguriert ist.

## Revendications

1. Procédé de réalisation d'une gestion de spectre en vue d'une contrainte prédéterminée dans un réseau comprenant une liaison d'accès de type ligne d'abonné numérique et une liaison de zone locale de type réseau domestique, ladite liaison d'accès et ladite liaison de zone locale étant couplées de manière interférente, ledit procédé comprenant les étapes suivantes :
- quantifier (410) une interférence entre ladite liaison d'accès et ladite liaison de zone locale ; et
- déterminer (430) une deuxième configuration spectrale souhaitée pour un deuxième émetteur (120 TX ; 121 TX ; 122 TX ; 123 TX) fonctionnant sur ladite liaison de zone locale ;
**caractérisé en ce que** ledit procédé comprend en outre l'étape suivante
- déterminer (420) une première configuration spectrale souhaitée pour un premier émetteur (110 TX) fonctionnant sur ladite liaison d'accès ;
**et en ce que** ladite détermination de ladite première configuration spectrale souhaitée et ladite détermination de ladite deuxième configuration spectrale souhaitée sont exécutées de sorte que les capacités de canal respectives pouvant être obtenues de ladite liaison d'accès et de ladite liaison de zone locale satisfassent ladite contrainte prédéterminée.

2. Procédé selon la revendication 1, dans lequel ladite contrainte prédéterminée comprend la maximisation de la somme pondérée desdites capacités de canal respectives de ladite liaison d'accès et de ladite liaison de zone locale.

3. Procédé selon la revendication 1, dans lequel ladite contrainte prédéterminée comprend la maximisation de la plus faible desdites capacités de canal respectives de ladite liaison d'accès et de ladite liaison de zone locale.

4. Procédé selon la revendication 1, comprenant en outre l'analyse d'une topologie dudit réseau pour déterminer ladite contrainte prédéterminée.

5. Procédé selon l'une quelconque des revendications précédentes, dans lequel ladite quantification (410) de ladite interférence comprend les étapes suivantes :
- parcourir ledit premier émetteur (110 TX) à travers un état actif et un état sensiblement passif pour déterminer une différence d'interférence reçue à partir dudit premier émetteur (110TX);
- parcourir ledit deuxième émetteur (120 TX ; 121 TX ; 122 TX ; 123 TX) à travers un état actif et un état sensiblement passif pour déterminer une différence d'interférence reçue à partir dudit deuxième émetteur (120 TX ; 121 TX ; 122 TX ; 123 TX) ;
- obtenir des premières informations à partir d'un premier récepteur (110 RX) fonctionnant sur ladite liaison d'accès pour déterminer une différence d'interférence reçue durant ledit parcours dudit deuxième émetteur (120 TX ; 121 TX ; 122 TX ; 123 TX) ; et
- obtenir des deuxièmes informations à partir d'un deuxième récepteur (120 RX ; 121 RX ; 122 RX ; 123 RX) fonctionnant sur ladite liaison de zone locale pour déterminer une interférence reçue durant ledit parcours dudit premier émetteur (110 TX).

6. Procédé selon la revendication 5, dans lequel ledit premier émetteur (110 TX) et ledit deuxième émetteur (120 TX) sont contenus dans un équipement des locaux d'abonné (100), ladite quantification (410) de ladite interférence étant commandée par un processeur contenu dans ledit équipement des locaux d'abonné (100), ledit processeur étant couplé de manière opérationnelle audit premier émetteur (110 TX) et audit deuxième émetteur (120 TX), et ledit processeur étant en outre configuré pour recevoir lesdites premières informations à partir dudit premier récepteur (110 RX) et lesdites deuxièmes informations à partir dudit deuxième récepteur (120 RX).

7. Procédé selon la revendication 5, dans lequel ladite quantification (410) de ladite interférence est commandée par un appareil de gestion de réseau (170), ledit appareil de gestion de réseau (170) étant configuré pour commander ledit premier émetteur (110 TX), ledit deuxième émetteur (120 TX; 121 TX ; 122 TX ; 123 TX), ledit premier récepteur (110 RX) et ledit deuxième récepteur (120 RX ; 121 RX ; 122 RX; 123 RX).

8. Procédé selon la revendication 7, dans lequel ledit appareil de gestion de réseau (170) commande au moins un élément parmi ledit premier émetteur (110 TX), ledit deuxième émetteur (120 TX ; 121 TX ; 122 TX ; 123 TX), ledit premier récepteur (110 RX) et ledit deuxième récepteur (120 RX ; 121 RX ; 122 RX ; 123 RX) par l'intermédiaire d'un échange de protocole TR-069.

9. Programme informatique configuré pour mettre en oeuvre, lorsqu'il est exécuté, le procédé selon l'une quelconque des revendications précédentes.

10. Équipement des locaux d'abonné (100) configuré pour exécuter le procédé selon la revendication 6, ledit équipement des locaux d'abonné (100) comprenant :
- un premier émetteur-récepteur (110), comprenant le premier émetteur et le premier récepteur, pour interagir avec ladite liaison d'accès,
- un deuxième émetteur-récepteur (120), comprenant le deuxième émetteur et le deuxième récepteur, pour interagir avec ladite liaison de zone locale, et
- un processeur couplé de manière opérationnelle audit premier émetteur-récepteur (110) et audit deuxième émetteur-récepteur (120), ledit processeur étant configuré pour exécuter ladite quantification (410) de ladite interférence et pour recevoir lesdites premières informations à partir dudit premier émetteur-récepteur (110) et lesdites deuxièmes informations à partir dudit deuxième émetteur-récepteur (120).

11. Appareil de gestion de réseau (170) à utiliser dans le procédé selon la revendication 7, ledit appareil de gestion de réseau (170) étant configuré pour commander ladite quantification (410) de ladite interférence en commandant ledit premier émetteur (110 TX), ledit deuxième émetteur (120 TX ; 121 TX ; 122 TX ; 123 TX), ledit premier récepteur (110 RX) et ledit deuxième récepteur (120 RX ; 121 RX ; 122 RX ; 123 RX).
